# EUROPÄISCHE PATENTSCHRIFT

(11) **EP 2 034 150 B1**
(45) Veröffentlichungstag und Bekanntmachung des Hinweises auf die Patenterteilung: **06.01.2010**
(21) Anmeldenummer: 08163173.1
(22) Anmeldetag: 28.08.2008
(51) Int. Cl.: F01N 3/28, B01J 35/04

(54) **Verfahren zum Anbringen einer Sonde an einer Abgasbehandlungseinrichtung**
Method for attaching a sensor at an exhaust gas treating device
Procédé d'attachement d'un capteur a une dispositif de traitement de gaz d'échappement

(30) Priorität: 06.09.2007 DE 102007042281
(43) Veröffentlichungstag der Anmeldung: 11.03.2009
(73) Patentinhaber: J. Eberspächer GmbH & Co. KG, 73730 Esslingen (DE)
(72) Erfinder: Kontz, Markus, 66125 Saarbrücken (DE); Müller, Bernd, 57350 Spicheren (FR)
(74) Vertreter: Bongen, Renaud & Partner

(56) Entgegenhaltungen:
- WO-A-2006/084742
- DE-A1-102004 063 546
- DE-A1-102005 018 746

## Beschreibung

Bei einer Vielzahl von Abgasbehandlungseinrichtungen, wie z.B. Partikelfilter und Katalysatoren, ist es erwünscht, zumindest eine Sonde, wie z.B. eine Lambda-Sonde oder eine NOX-Sonde, anzubringen. Konventionelle Abgasbehandlungseinrichtungen umfassen zumindest einen keramischen Einsatz, der mit Hilfe einer Lagermatte in einem metallischen Gehäuse fixiert ist. Um bei einer derartigen Abgasbehandlungseinrichtung eine Sonde anbringen zu können, ist eine das Gehäuse und die Lagermatte durchdringende und in den Einsatz eindringende Aufnahmeöffnung erforderlich. In diese Aufnahmeöffnung kann dann die Sonde eingeführt werden. Siehe z.B. DE 10 2005 018 746 A1 oder DE 10 2004 063 546 A1.

Um eine derartige Aufnahmeöffnung herzustellen, ist es grundsätzlich möglich, in das Gehäuse vor dem Einbringen des Einsatzes und der Lagermatte eine entsprechende Öffnung einzubringen. Ebenso kann in den Einsatz vor dem Einbringen in das Gehäuse eine entsprechende Öffnung eingebracht werden. Des weiteren kann auch in die Lagermatte vor dem Umwinkeln des Einsatzes eine entsprechende Aussparung eingebracht werden. Beim Umwinkeln des Einsatzes mit der Lagermatte müssen dann die Aussparung der Lagermatte und die Öffnung im Einsatz zueinander exakt positioniert und ausgerichtet werden. Beim anschließenden Einsetzen des Einsatzes mit umwickelter Lagermatte in das Gehäuse, dem sogenannten "Canning", muss ebenfalls auf eine fluchtende Ausrichtung der unterschiedlichen Öffnungen bzw. Aussparungen in Gehäuse, Lagermatte und Einsatz geachtet werden. Die Ausrichtung der Öffnungen bzw. Aussparungen beim Canning muss einerseits vergleichsweise sorgfältig durchgeführt werden und ist andererseits toleranzbehaftet. Des weiteren muss der keramische Einsatz zum Einbringen der Öffnung relativ aufwändig fixiert werden, um eine Beschädigung des vergleichsweise spröden Einsatzes zu vermeiden.

Aus der DE 10 2004 013 640 A1, der FR 2 851 486 A1, der DE 42 24 131 A1, der EP 1 364 724 A1 und der DE 103 20 140 A1 sind Verfahren zum Einbringen von Öffnungen in einen Metallkörper bekannt.

Die vorliegende Erfindung beschäftigt sich mit dem Problem, für ein Verfahren der eingangs genannten Art eine verbesserte Ausführungsform anzugeben, die sich insbesondere dadurch auszeichnet, dass die Herstellung vereinfacht ist und/oder dass engere Toleranzen realisierbar sind und/oder dass eine bessere fluchtende Ausrichtung innerhalb der Aufnahmeöffnung realisierbar ist.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Aufnahmeöffnung erst dann anzubringen, wenn der Einsatz bereits mittels der Lagermatte im Gehäuse fixiert ist. Die jeweilige Aufnahmeöffnung wird dabei von außen so angebracht, dass sie das Gehäuse und die Lagermatte durchsetzt und in den Einsatz eindringt. Bei dieser Vorgehensweise ergibt sich zwangsläufig eine optimale Flucht zwischen den einzelnen Öffnungen bzw. Aussparungen im Gehäuse, in der Lagermatte und im Einsatz. Besonders vorteilhaft ist bei dieser Vorgehensweise, dass der Einsatz im Gehäuse hinreichend fixiert ist, um die Öffnung im Einsatz herstellen zu können, ohne dass dabei eine erhöhte Beschädigungsgefahr für den Einsatz besteht. Insoweit kann auf eine separate Fixierung des Einsatzes für das Herstellen der Aufnahmeöffnung verzichtet werden. Insgesamt ergibt sich somit eine vereinfachte Herstellung für die Aufnahmeöffnung.

Besonders vorteilhaft ist eine Ausführungsform, bei welcher die Aufnahmeöffnung mittels eine Bohrprozesses bzw. mittels eines Zerspannungsprozesses hergestellt wird. Diese Vorgehensweise ist gerade im Hinblick auf den keramischen Einsatz besonders schonend, wodurch die Gefahr von Beschädigungen des Einsatzes reduziert ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,

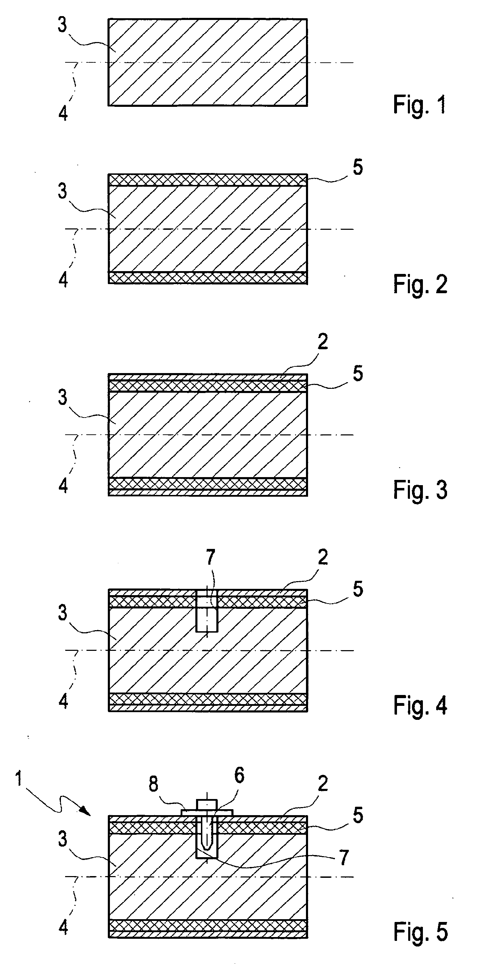

- Fig. 1 bis 5: jeweils einen stark vereinfachten Längsschnitt durch einen Teil einer Abgasbehandlungseinrichtung bei unterschiedlichen Phasen während der Anbringung einer Sonde.

Entsprechend Fig. 5 umfasst eine Abgasbehandlungseinrichtung 1 ein hier nur teilweise dargestelltes Gehäuse 2. Das Gehäuse 2 ist aus Metall hergestellt und ist bevorzugt ein Rohrkörper, der in Umfangsrichtung geschlossen ist. In der Regel handelt es sich hierbei um einen Blechformkörper. Das Gehäuse 2 kann zumindest an einem axialen Ende einen Trichter aufweisen. Die Abgasbehandlungseinrichtung 1 weist außerdem zumindest einen Einsatz 3 auf, der aus einem keramischen Werkstoff hergestellt ist. Hierbei kann es sich um einen monolithischen Einsatz 3 handeln. Ebenso kann der Einsatz 3 aus mehreren Monolithen zusammengebaut sein. Der Abgasbehandlungseinsatz 1 kann beispielsweise als Katalysator ausgestaltet sein, wobei dann der jeweilige Einsatz 3 als Träger oder Substrat für ein entsprechendes Katalysatormaterial dient. Ebenso kann es sich bei der Abgasbehandlungseinrichtung 1 beispielsweise um ein Partikelfilter handeln, wobei dann der jeweilige Einsatz 3 die Filterfunktion aufweist. Der Einsatz 3 besitzt in üblicher Weise eine Vielzahl, hier nicht näher dargestellter paralleler Kanäle, die sich parallel zu einer Längsmittelachse 4 des Abgasbehandlungseinsatzes 1 erstrecken.

Der jeweilige Einsatz 3 ist mit Hilfe zumindest einer Lagermatte 5 im Gehäuse 2 fixiert. Die Lagermatte 5 umhüllt dabei den Einsatz 3 in Umfangsrichtung, in der Regel einlagig. Ebenso ist eine mehrlagige Umhüllung denkbar. Die Lagermatte 5 dient einerseits zur thermischen Isolierung des Gehäuses 2 gegenüber dem Einsatz 3, der im Betrieb einer Abgasanlage, in welche der Abgasbehandlungseinsatz 1 eingebaut ist, vergleichsweise hohen Temperaturen ausgesetzt ist. Zum anderen dient die Lagermatte zur schwingungsgedämpften Halterung des Einsatzes 3 im Gehäuse 2, um die Gefahr von Beschädigungen des relativ spröden Einsatzes 3 durch Erschütterungen oder Vibrationen zu reduzieren, die im Betrieb beispielsweise eines mit der Abgasanlage ausgestatteten Fahrzeugs auftreten können. Des weiteren dient die Lagermatte 5 zur Lagefixierung des Einsatzes 3 im Gehäuse 2. Hierzu wird die Lagermatte 5 bezüglich der Längsmittelachse 4 radial zwischen dem Einsatz 3 und dem Gehäuse 2 verpresst. Durch federnde Rückstellkräfte im Material der Lagermatte 5 ergibt sich dann eine radiale Vorspannung, die hinreichend Haltekräfte zum Fixieren des Einsatzes 3 im Gehäuse 2 erzeugt.

Entsprechend Fig. 5 weist die Abgasbehandlungseinrichtung 1 zumindest eine Sonde 6 auf, die in einer Aufnahmeöffnung 7 aufgenommen ist. Die Sonde 6 kann beispielsweise eine Lambda-Sonde oder Sauerstoffsonde oder eine NOX-Sonde oder eine Temperatursonde oder eine Drucksonde oder dergleichen sein. Die Aufnahmeöffnung 7 durchdringt zum einen das Gehäuse 2 und zum andern die Lagermatte 5. Ferner dringt die Aufnahmeöffnung 7 in den Einsatz 3 ein. Die Sonde 6 ragt in die Aufnahmeöffnung 7 ein, bzw. ist die Sonde 6 in die Aufnahmeöffnung 7 eingesetzt. Zur Halterung der Sonde 6 am Abgasbehandlungseinsatz 1 kann eine Fassung 8 vorgesehen sein, die am Gehäuse 2 befestigt ist.

Im Folgenden wird ein Verfahren zum Anbringen der Sonde 6 an der Abgasbehandlungseinrichtung 1 näher erläutert:

Zunächst wird in üblicherweise der Einsatz 3 entsprechend den Fig. 1 bis 3 in das Gehäuse 2 eingebracht und darin mit Hilfe der Lagermatte 5 fixiert. Bei diesem sogenannten Canning wird bei einem rohrförmigen Gehäuse 2 zunächst der in Fig. 1 gezeigte Einsatz 3 entsprechend Fig. 2 mit Hilfe der Lagermatte 5 entlang seines Umfangs umhüllt. Anschließend wird der Einsatz 3 zusammen mit der ihn umhüllenden Lagermatte 5 in axialer Richtung in das Gehäuse 2 eingeführt. Dies kann auf unterschiedliche Weise durchgeführt werden. Zum einen kann das Gehäuse 2 zunächst einen vergrößerten Durchmesser aufweisen, wodurch der Einsatz 3 mit der Lagermatte 5 vergleichsweise einfach axial, also parallel zur Längsmittelachse 4 in das Gehäuse 2 einführbar ist. Anschließend kann dann das Gehäuse 2 umgeformt werden, derart, dass sich dabei sein Durchmesser reduziert. Hierbei kommt es zur gewünschten Verpressung der Lagermatte 5. Alternativ ist es ebenso möglich, den Einsatz 3 mit der Lagermatte 5, z.B. über einen Trichter oder dergleichen, bei verpresster Lagermatte 5 in das Gehäuse 2 axial einzuführen.

Sobald der Einsatz 3 im Gehäuse 2 angeordnet ist und darin durch die radial verpresste Lagermatte 5 fixiert ist, liegt der in Fig. 3 gezeigte Zustand vor.

Erfindungsgemäß wird nun die Aufnahmeöffnung 7 entsprechend Fig. 4 dann hergestellt, wenn der Einsatz 3 bereits mit Hilfe der Lagermatte 5 im Gehäuse 2 fixiert ist. Beispielsweise kann hierbei ein herkömmlicher Zerspannungsvorgang verwendet werden. Bevorzugt kann die Aufnahmeöffnung 7 gebohrt oder gefräst werden. Besonders vorteilhaft ist hierbei, dass zum Herstellen der Aufnahmeöffnung 7 lediglich das Gehäuse 2 in einem entsprechenden Werkzeug fixiert werden muss. Eine separate oder zusätzliche Fixierung der Lagermatte 5 und/oder des Einsatzes 3 ist nicht erforderlich, da sowohl die Lagermatte 5 als auch der Einsatz 3 aufgrund der radialen Verpressung der Lagermatte 5 zwischen Einsatz 3 und Gehäuse 2 im Gehäuse 2 hinreichend fixiert sind. Dies erleichtert das Einbringen der Aufnahmeöffnung 7. Ferner ergibt sich durch diese quasi nachträgliche Einbringung der Aufnahmeöffnung 7 automatisch eine optimale und fluchtende Ausrichtung der einzelnen Teilöffnungen im Gehäuse 2, in der Lagermatte 5 und im Einsatz 3 relativ zueinander.

Entsprechend Fig. 5 kann anschließend außen am Gehäuse 2 die Fassung 8 befestigt werden. Beispielsweise kann die Fassung 8 hierzu an das Gehäuse 2 angelötet werden oder an das Gehäuse 2 angeschweißt werden. Grundsätzlich sind auch andere Befestigungsmethoden denkbar. Die Fassung 8 ist so ausgestaltet, dass daran die Sonde 6 so festlegbar ist, dass die Sonde 6 in die Aufnahmeöffnung 7 hinreichend weit hineinragt. Beispielsweise kann die Fassung 8 hierzu ein nicht näher gezeigtes Gewinde aufweisen, in das die Sonde 6 einschraubbar ist.

Bei der hier gezeigten Ausführungsform ist die Aufnahmeöffnung 7 bezüglich der Längsmittelachse 4 radial orientiert. Es ist klar, dass grundsätzlich auch eine andere Orientierung denkbar ist.

## Patentansprüche

1. Verfahren zum Anbringen einer Sonde (6) an einer Abgasbehandlungseinrichtung (1), die wenigstens einen keramischen Einsatz (3) aufweist, der mittels wenigstens einer Lagermatte (5) in einem metallischen Gehäuse (2) fixiert ist, bei dem eine das Gehäuse (2) und die Lagermatte (5) durchdringende und in den Einsatz (3) eindringende Aufnahmeöffnung (7) zur Aufnahme der Sonde (6) bei bereits in das Gehäuse (2) eingesetztem und mit der Lagermatte (5) darin fixiertem Einsatz (3) hergestellt wird.

2. Verfahren nach Anspruch 1,
**dadurch gekennzeichnet,**
**dass** die Aufnahmeöffnung (7) durch einen Bohrvorgang und/oder durch eine Zerspannungsprozess hergestellt wird.

3. Verfahren nach Anspruch 1 oder 2,
**dadurch gekennzeichnet,**
**dass** außen am Gehäuse (2) eine Fassung (8) befestigt wird, an der die Sonde (6) so festlegbar ist, dass sie in die Aufnahmeöffnung (7) hineinragt.

4. Verfahren nach Anspruch 3,
**dadurch gekennzeichnet,**
**dass** die Fassung (8) an das Gehäuse (2) angelötet oder angeschweißt wird.

5. Verfahren nach Anspruch 3 oder 4,
**dadurch gekennzeichnet,**
**dass** die Fassung (8) ein Gewinde aufweist, in das die Sonde (6) eingeschraubt wird.

6. Verfahren nach einem der Ansprüche 1 bis 5,
**dadurch gekennzeichnet,**
**dass** die Aufnahmeöffnung (7) bezüglich einer Längsmittelachse (4) des Abgasbehandlungseinsatzes (1) radial orientiert ist.

7. Abgasbehandlungseinrichtung, insbesondere Partikelfilter oder Katalysator, für eine Abgasanlage einer Brennkraftmaschine, insbesondere in einem Kraftfahrzeug, mit wenigstens einem keramischen Einsatz (3), der mittels wenigstens einer Lagermatte (5) in einem metallischen Gehäuse (2) fixiert ist, wobei zumindest eine Aufnahmeöffnung (7) vorgesehen ist, die zur Aufnahme einer Sonde (6) dient, die das Gehäuse (2) und die Lagermatte (5) durchdringt und in den Einsatz (3) eindringt und die bei bereits in das Gehäuse (2) eingesetztem und mit der Lagermatte (5) darin fixiertem Einsatz (3) hergestellt worden ist.

## Claims

1. A method for attaching a probe (6) to an exhaust gas treatment device (1), comprising at least one ceramic insert (3), which is fixed in a metal housing (2) by means of at least one bearing mat (5), wherein a holding opening (7) penetrating the housing (2) and the bearing mat (5) and entering the insert (3) for holding the probe (6) is produced with the insert (3) already inserted in the housing (2) and fixed with the bearing mat (5) in said housing.

2. The method according to Claim 1, **characterized in that** the holding opening (7) is produced through a drilling operation and/or through a chip-removing operation.

3. The method according to Claim 1 or 2, **characterized in that** on the outside on the housing (2) a holder (8) is fastened on which the probe (6) can be fixed so that it protrudes into the holding opening (7).

4. The method according to Claim 3, **characterized in that** the holder (8) is soldered or welded to the housing (2) .

5. The method according to Claim 3 or 4, **characterized in that** the holder (8) comprises a thread into which the probe (6) is screwed.

6. The method according to any one of the Claims 1 to 5, **characterized in that** the holding opening (7) with respect to a longitudinal centre axis (4) of the exhaust gas treatment insert (1) is radially orientated.

7. An exhaust gas treatment device, more preferably particle filter or catalytic converter, for an exhaust system of an internal combustion engine, more preferably in a motor vehicle, with at least one ceramic insert (3), which is fixed in a metal housing (2) by means of at least one bearing mat (5), wherein at least one holding opening (7) is provided which serves to hold a probe (6) which penetrates the housing (2) and the bearing mat (5) and enters the insert (3) and which has been produced with the insert already inserted in the housing (2) and with the bearing mat (5) fixed therein.

## Revendications

1. Procédé pour le placement d'une sonde (6) sur un dispositif de traitement de gaz d'échappement (1), qui présente au moins un insert (3) céramique, qui est fixé au moyen d'au moins un tapis de stockage (5) dans un boîtier (2) métallique, avec lequel une ouverture de logement (7) traversant le boîtier (2) et le tapis de stockage (5) et pénétrant dans l'insert (3) est pratiquée pour le logement de la sonde (6) avec l'insert (3) déjà inséré dans le boîtier (2) et fixé dedans avec le tapis de stockage (5).

2. Procédé selon la revendication 1,
**caractérisé en ce que**
l'ouverture de logement (7) est pratiquée par une opération de perçage et/ou par un procédé d'enlèvement de copeaux.

3. Procédé selon la revendication 1 ou 2,
**caractérisé en ce que**
à l'extérieur du boîtier (2) est fixée une monture (8) sur laquelle la sonde (6) peut être fixée de telle sorte qu'elle dépasse à l'intérieur de l'ouverture de logement (7).

4. Procédé selon la revendication 3,
**caractérisé en ce que**
la monture (8) est fixée au boîtier (2) par brasage ou soudage.

5. Procédé selon la revendication 3 ou 4,
**caractérisé en ce que**
la monture (8) présente un filetage dans lequel la sonde (6) est vissée.

6. Procédé selon l'une quelconque des revendications 1 à 5,
**caractérisé en ce que**
l'ouverture de logement (7) est orientée radialement par rapport à un axe central longitudinal (4) de l'insert de traitement de gaz d'échappement (1).

7. Dispositif de traitement de gaz d'échappement, en particulier filtre à particules ou catalyseur, pour une installation d'échappement d'un moteur à combustion interne, en particulier sur un véhicule, comprenant au moins un insert (3) céramique, qui est fixé au moyen d'au moins un tapis de stockage (5) dans un boîtier (2) métallique, au moins une ouverture de logement (7) étant prévue, qui sert au logement d'une sonde (6), qui traverse le boîtier (2) et le tapis de stockage (5) et pénètre dans l'insert (3) et qui a été pratiquée avec l'insert (3) déjà inséré dans le boîtier (2) et fixé dedans avec le tapis de stockage (5).
